# EUROPÄISCHE PATENTSCHRIFT

(11) **EP 1 723 001 B1**
(45) Veröffentlichungstag und Bekanntmachung des Hinweises auf die Patenterteilung: **28.04.2010**
(21) Anmeldenummer: 05715838.8
(22) Anmeldetag: 08.03.2005
(51) Int. Cl.: B60N 2/62, B60R 7/04

(54) **SITZ FÜR EIN FAHRZEUG**
VEHICLE SEAT
SIEGE POUR VEHICULE

(30) Priorität: 11.03.2004 DE 102004011954
(43) Veröffentlichungstag der Anmeldung: 22.11.2006
(73) Patentinhaber: Bayerische Motoren Werke Aktiengesellschaft, 80809 München (DE)
(72) Erfinder: KRIST, Peter, 86573 Obergriesbach (DE); LUECHT, Daniel, 18055 Rostock (DE); EIBA, Gerd, 85521 Ottobrunn (DE)
(74) Vertreter: Günther, Hans Peter
(86) Internationale Anmeldenummer: PCT/EP2005/002442
(87) Internationale Veröffentlichungsnummer: WO 2005/087539

(56) Entgegenhaltungen:
- WO-A-01/70071
- DE-A1- 10 156 163
- DE-U1- 9 412 066
- FR-A- 2 783 217
- US-A- 3 173 722
- PATENT ABSTRACTS OF JAPAN Bd. 1996, Nr. 02, 29. Februar 1996 (1996-02-29) & JP 07 277082 A (ARACO CORP), 24. Oktober 1995 (1995-10-24)

## Beschreibung

Die Erfindung betrifft einen Sitz für ein Fahrzeug gemäß dem Oberbegriff des Anspruchs 1.

Es ist bereits ein Sitz für ein Fahrzeug bekannt, der eine Rückenlehne mit einer gegebenenfalls daran angeordneten Kopfstütze und ein mit der Rückenlehne verbundenes Sitzteil aufweist. An dem bekannten Sitzteil ist an einer Stirnseite des Sitzes bzw. des Sitzteils eine verschiebbare Oberschenkelauflage vorgesehen.

Aus der JP 07 277 082 A ist ein Sitz mit einer Rückenlehne und einem Sitzteil bekannt. Das Sitzteil ist in einer liegenden Position in einer Aussparung angeordnet, die seitliche Sitzwülste aufweist. An einer von der Rückenlehne beabstandeten Stirnseite des Sitzteils ist eine querverlaufende, waagrechte Achse ausgebildet. Das Sitzteil ist um die Achse aus der liegenden Position in der Aussparung nach oben in eine stehende Position verschwenkbar. Zwischen der Rückenlehne und dem sich in der stehenden Position befindenden Sitzteil ergibt sich ein Stauraum, in dem ein Gegenstand abgelegt werden kann.

Aus der US 3 173 722 A ist bereits ein Sitz mit einer Rückenlehne und einem Sitzteil bekannt. Ein Halterungsbauteil ist in einer eingefahrenen Position in einem Hohlraum des Sitzteils angeordnet und bildet mit der nach oben zeigenden Oberfläche einen Bereich der Sitzfläche des Sitzteils. In einer nach oben ausgefahrenen Position des Halterungsbauteils dient das Halterungsbauteil als Stützung der Oberschenkel eines Insassen.

Aus der FR 2 783 217 A ist ein Sitz mit einer Rückenlehne und einem Sitzteil bekannt. An einer Stirnseite des Sitzteils ist ein Sitzteilabschnitt verschwenkbar an dem Sitzteil angeordnet. In einer eingeklappten Position dient eine Oberfläche des Sitzteilabschnitts als Sitzfläche und schließt sich an die daran benachbarte Sitzfläche des Sitzteils an. Der Sitzteilabschnitt ist aus der eingeklappten Position mit der Sitz-Funktion in eine ausgeklappte Position verschwenkbar. In der ausgeklappten Position des Sitzteilabschnitts dient eine Innenfläche des Sitzteilabschnitts als ein Anschlag für Gegenstände, die zwischen der Rückenlehne und dem ausgeklappten Sitzteilabschnitt angeordnet sind.

Aus der DE 101 56 163 A1 ist ein Kraftfahrzeugsitz mit einem Sitzteil und einer Rückenlehne bekannt. Das Sitzteil weist an einem vorderen Bereich einen vorderen Sitzteilabschnitt auf, der aus einer eingefahrenen Position in eine ausgefahrene Position in Längsrichtung x des Sitzteils verfahrbar ist. Im ausgefahrenen Zustand des Sitzteilabschnittes ergibt sich ein nach oben hin offenes Ablagefach. Das Ablagefach ist zwischen dem vorderen Sitzteilabschnitt, dem dazu gegenüberliegenden verbleibenden Sitzteil, einem Bodenabschnitt des Sitzteils sowie gegenüberliegenden Seitenwänden des Sitzteils ausgebildet.

Aus der DE 94 12 066 U1 ist ein Sitz mit einem Sitzteil und einer Rückenlehne bekannt. Ein vorderer Abschnitt des Sitzteils ist aus einer eingefahrenen Position in eine ausgefahrene Position verschiebbar. In der ausgefahrenen Position bildet der vordere Sitzteilabschnitt ein nach oben hin offenes Ablagefach mit einer vorderen Begrenzungswand und einem Bodenabschnitt, der gleichzeitig als Führung dient.

In einer anderen aus der DE 94 12 066 U1 bekannten Ausführungsform ist ein als Sitzkissen dienender oberer Sitzteilabschnitt aus einer eingeklappten Position in eine ausgeklappte Position verschwenkbar. In der eingeklappten Position dient eine Außenfläche des oberen Sitzteilabschnitts als Sitzfläche. In der ausgeklappten Position bildet eine im eingeklappten Zustand des oberen Sitzteilabschnitts nach unten zeigende Innenfläche des oberen Sitzteilabschnitts einen Anschlag für einen Gegenstand, der zwischen der Rückenlehne und dem ausgeklappten Sitzteil angeordnet werden kann.

Aus der WO 01/70071 A2 dem Oberbegriff entsprechend ist ein Sitz für ein Fahrzeug bekannt, wobei der Sitz mit einer Rückenlehne und einem an der Rückenlehne angeordnetem Sitzteil versehen ist. Das Sitzteil weist ein Untergestell auf, das mit einer Karosserie des Fahrzeugs verbindbar ist, wobei vor dem Sitzteil ein separates Bauteil angeordnet ist, das zur Verlängerung der Oberschenkelauflagefläche in Längsrichtung des Sitzteils geeignet ist. Das separate Bauteil befindet sich in einer eingefahrenen Position vor dem Sitzteil. Das separate Bauteil ist aus der eingefahrenen Position um eine vorbestimmte Ausfahrstrecke in eine ausgefahrene Position und zurück verschiebbar. Ferner ist eine Vorrichtung zum Verschieben des separaten Bauteils von einer eingefahrenen Position in eine ausgefahrene Position und zurück vorgesehen. Das separate Bauteil oder ein Abschnitt des separaten Bauteils ist verschwenkbar an dem Sitzteil von einer in etwa waagrechten Sitzposition in eine um einen Winkel verschwenkte Halterungsposition und zurück bewegbar.

Aufgabe der Erfindung ist es, einen Sitz für ein Fahrzeug zu schaffen, bei dem eine Oberschenkelauflage zur Halterung von Gegenständen dient.

Diese Aufgabe wird durch die Merkmale des Anspruchs 1 gelöst.

Bei dem erfindungsgemäßen Sitz weist die nach vorne verschiebbare Oberschenkelauflage mindestens eine in Fahrzeugquerrichtung verlaufende, horizontale Schwenkachse auf, um die die Oberschenkelauflage oder ein Teil davon nach oben verschwenkbar ist. Die Oberschenkelauflage kann über eine entsprechend angeordnete Schwenkachse nach vorne oder nach hinten in Richtung der Rückenlehne verschwenkt werden. Ferner ist in einer vorteilhaften Ausführungsform mindestens eine Vorrichtung vorgesehen, durch die die Oberschenkelauflage zumindest in der nach oben verschwenkten Position arretierbar ist.

In einer vorteilhaften Ausführungsform ist die Oberschenkelauflage um einen Winkel α verschwenkbar, wobei der Winkel α = 90° ± 20° beträgt.

Die vorhandene Anzahl an erfindungsgemäßen Vorrichtungen zur Arretierung und gegebenenfalls zur Verschwenkung der Oberschenkelauflage ist in einer vorteilhaften Ausführungsform an einer Längsseite des Sitzteils angeordnet. Vorteilhafterweise sind zwei erfindungsgemäße Vorrichtungen symmetrisch am Sitzteil vorgesehen.

Vorteilhafterweise ist die erfindungsgemäße Vorrichtung zum Verschwenken und Arretieren der Oberschenkelauflage mindestens eine manuell oder automatisch betätigbare Gasfeder.

Bei einer vorteilhaften Vorrichtung zum Verschwenken und Arretieren der Oberschenkelauflage ist ein Viergelenk vorgesehen, das in einer vorteilhaften Ausführungsform selbstverschränkend ist. Zur Entriegelung des verschränkten Viergelenkes ist in einer vorteilhaften Ausführungsform ein Betätigungsmittel, beispielsweise eine Schlaufe oder eine Lasche, an einer Strebe des Viergelenks vorgesehen, über das die Strebe aus der verschränkten Lage herausziehbar ist.

In einer vorteilhaften Ausführungsform ist die Vorrichtung zum Verschwenken und Arretieren der Oberschenkelauflage mit einer Kulissenführung versehen, die nach dem Push-Push-Prinzip arbeitet. Bei dieser Vorrichtung gleitet ein Gleitstein in einer beispielsweise herzförmigen Kulissenführung.

In einer weiteren vorteilhaften Ausführungsform ist die Push-Push-Kulissenführung mit einem Viergelenk kombiniert.

Vorteilhafterweise sind in einer Ausführungsform Mittel vorgesehen, durch die ein Verschwenken der Oberschenkelauflage nach oben nur dann erfolgen kann, wenn der Sitzplatz auf dem Sitzteil nicht belegt ist.

Ausführungsformen der Erfindung werden nachstehend anhand der Zeichnungen beispielshalber beschrieben. Dabei zeigen:
- Fig. 1: eine Seitenansicht eines Sitzes, bei dem sich ein Gegenstand auf einem Sitzteil des Sitzes befindet, wobei der Gegenstand durch einen Abschnitt einer verstellbaren Oberschenkelauflage gehaltert ist,
- Fig. 2: eine Seitenansicht eines vorderen Abschnittes des in der Fig. 1 gezeigten Sitzes, bei dem sich die Oberschenkelauflage in einer in etwa waagrechten Sitzposition befindet,
- Fig. 3a: eine Seitenansicht der in der Fig. 2 gezeigten Oberschenkelauflage in einer Halterungsposition, wobei die Verschwenkung der Oberschenkelauflage nach hinten über einen ausfahrbaren Kolben erfolgt,
- Fig. 3b: eine Seitenansicht der in der Fig. 2 gezeigten Oberschenkelauflage in einer Halterungsposition, wobei die Verschwenkung der Oberschenkelauflage nach vorne über einen ausfahrbaren Kolben erfolgt,
- Fig. 4: eine Seitenansicht einer verstellbaren Oberschenkelauflage in einer in etwa waagrechten Sitzposition, die durch ein Viergelenk verschwenkbar und arretierbar ist,
- Fig. 5: eine Seitenansicht der in der Fig. 4 gezeigten Oberschenkelauflage in einer nach oben geschwenkten Halterungsposition, wobei sich das Viergelenk in einer verschränkten Stellung befindet,
- Fig. 6: eine Seitenansicht der in der Fig. 5 gezeigten, nach oben geschwenkten Oberschenkelauflage vor dem Erreichen der Halterungsposition,
- Fig. 7: eine Seitenansicht einer Oberschenkelauflage, die sich in einer Sitzposition befindet, wobei zur Positionierung der Oberschenkelauflage aus der Sitzposition in die Halterungsposition und zurück eine Kulissenführung vorgesehen ist,
- Fig. 8a: eine Seitenansicht der in der Fig. 7 gezeigten Oberschenkelauflage in einer über die Kulissenführung nach hinten verschwenkten Halterungsposition, und
- Fig. 8b: eine Seitenansicht einer weiteren Ausführungsform, bei der eine Oberschenkelauflage über eine Kulissenführung und eine vordere Schwenkachse in eine Halterungsposition nach vorne verschwenkt ist.

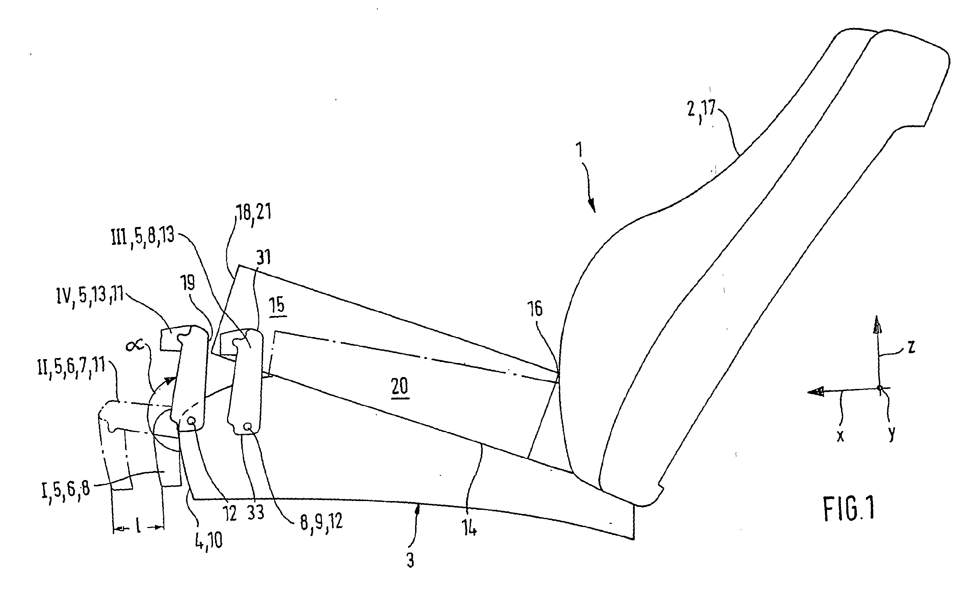

Die Fig. 1 zeigt einen Sitz 1, der beispielsweise in einem Kraftfahrzeug als Beifahrersitz verwendbar ist. Der Sitz 1 weist eine Rückenlehne 2 sowie ein damit verbundenes Sitzteil 3 auf. An einer vorderen Stirnseite 4 des Sitzteils 3 ist eine in Längsrichtung x des Sitzteils 3 ausfahrbare Oberschenkelauflage 5 vorgesehen.

In der Fig. 1 ist die Oberschenkelauflage 5 in vier verschiedenen Positionen I, II, III und IV gezeigt. Die Positionen I und II betreffen eine in etwa horizontale Sitzposition 6 der Oberschenkelauflage 5 zum einen in einer eingefahrenen Position 8 und zum anderen in einer ausgefahrenen Position 11. Die Positionen III und IV zeigen die Oberschenkelauflage 5 in einer in etwa senkrechten Halterungsposition 13 zum einen in der eingefahrenen Position 8 und zum anderen in einer ausgefahrenen Position 11.

In der Sitzposition 6 befindet sich ein Sitzabschnitt 7 der Oberschenkelauflage 5 in einer in etwa horizontalen Lage. In der eingefahrenen Position 8 ist die Oberschenkelauflage 5 in einer Ausnehmung 9 angeordnet, die am vorderen Ende 10 des Sitzteils 3 ausgebildet ist. In der ausgefahrenen Position 11 steht der vordere Sitzabschnitt 7 zusätzlich um einen Verschiebeweg I über die Stirnseite 4 des Sitzteils 3 über.

Der Sitzabschnitt 7 der Oberschenkelauflage 5 ist über eine horizontale, in Fahrzeugquerrichtung y verlaufende Schwenkachse 12 nach oben in eine Halterungsposition 13 verschwenkbar. Bei der in der Fig. 1 gezeigten Ausführungsform wird der Sitzabschnitt 7 nach hinten in Richtung der Rückenlehne 2 um einen Winkel α geschwenkt, so dass der Sitzabschnitt 7 eine in etwa senkrechte Lage einnimmt. Der Winkel α beträgt in der Regel α = 90°+/- 20°.

Auf einer Oberfläche 14 des Sitzteils 3 ist ein Gegenstand 15 angeordnet. Ein hinteres Ende 16 des Gegenstandes 15 liegt an einer Oberfläche 17 der Rückenlehne 2 an. Der Sitzabschnitt 7 der Oberschenkelauflage 5 befindet sich in der Position IV. Ein vorderes Ende 18 des Gegenstandes 15 wird durch eine Oberfläche 19 des Sitzabschnittes 7 der Oberschenkelauflage 5 an einem Wegrutschen in Längsrichtung x des Sitzteils 3 gehindert. Der Gegenstand 15 kann beispielsweise ein Aktenkoffer sein. Unterhalb des Gegenstandes 15 ist in der Fig. 1 ein kürzerer Gegenstand 20, beispielsweise ein Laptop dargestellt, der durch den in der Position III befindlichen Sitzabschnitt 7 der Oberschenkelauflage 5 gehaltert wird.

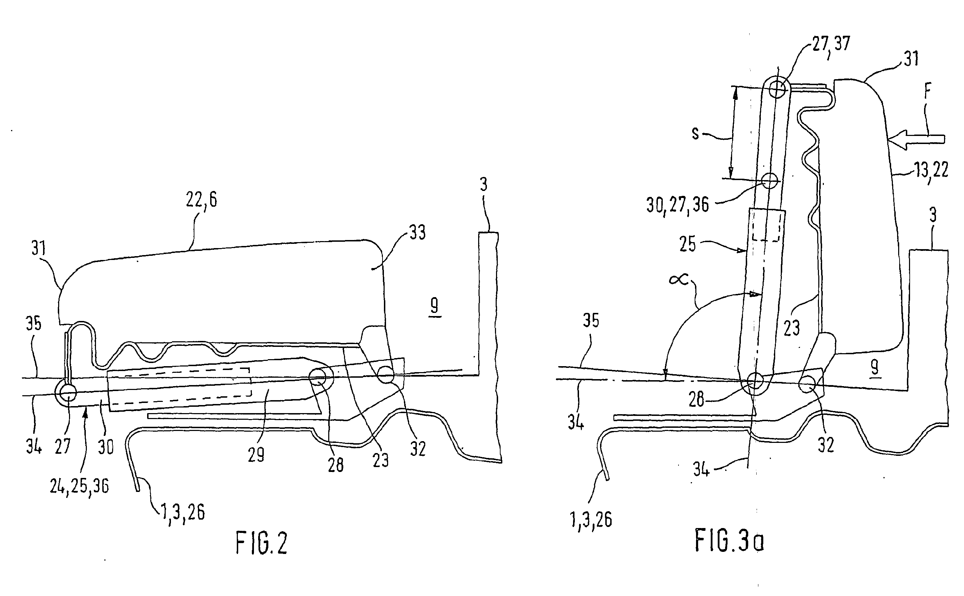

Die Fig. 2 zeigt eine Oberschenkelauflage 22, die in einer Ausnehmung 9 vor einem Sitzteil 3 des nicht weiter dargestellten Sitzes 1 angeordnet ist. Unterhalb einer Unterseite 23 der Oberschenkelauflage 22 ist eine Schwenk- und Arretierungsvorrichtung 24 vorgesehen, die in der gezeigten Ausführungsform als eine Zylinder-Kolbeneinheit 25 ausgebildet ist. Unterhalb der Schwenk- und Arretierungsvorrichtung 24 ist ein Untergestell 26 des Sitzteils 3 teilweise dargestellt.

In der gezeigten Ausführungsform ist die Zylinder-Kolbeneinheit 25 eine Gasfeder, die zwei Drehachsen 27 und 28 aufweist. Über die Drehachse 28 ist ein Zylinder 29 mit dem Untergestell 26 des Sitzteils 3 schwenkbar verbunden. Die Drehachse 27 betrifft die Drehverbindung zwischen einem Kolben 30 der Zylinder-Kolbeneinheit 25 und einem vorderen Ende 31 der Oberschenkelauflage 22.

Ferner ist in der Fig. 2 eine weitere Drehachse 32 vorgesehen, über die ein hinteres Ende 33 der Oberschenkelauflage 22 schwenkbar mit dem Untergestell 26 des Sitzes 1 verbunden ist. Durch die beiden Drehachsen 27, 28 der Gasfeder 25 verläuft eine Längsachse 34 der Zylinder-Kolbeneinheit 25. Oberhalb der Längsachse 34 ist die waagrechte Ebene x-y als Linie 35 eingezeichnet.

Die Fig. 3a zeigt die Oberschenkelauflage 22 in der um einen Winkel α nach oben geschwenkten Halterungsposition 13. Der Kolben 30 ist in der Fig. 3a um eine Strecke s gegenüber der in der Fig. 2 dargestellten eingefahrenen Position 36 in die in der Fig. 3a gezeigte Position 37 ausgefahren. Der Hub s beträgt, je nach Ausführungsform des Zylinders 29 und des Kolbens 30, s = 50 mm bis 200 mm. Die wirkenden Kräfte sind so ausgelegt; dass beispielsweise eine Anpresskraft von F = 50 N bis 200 N der Oberschenkelauflage 22 auf das vordere Ende 18 des Gegenstandes 15 vorliegt.

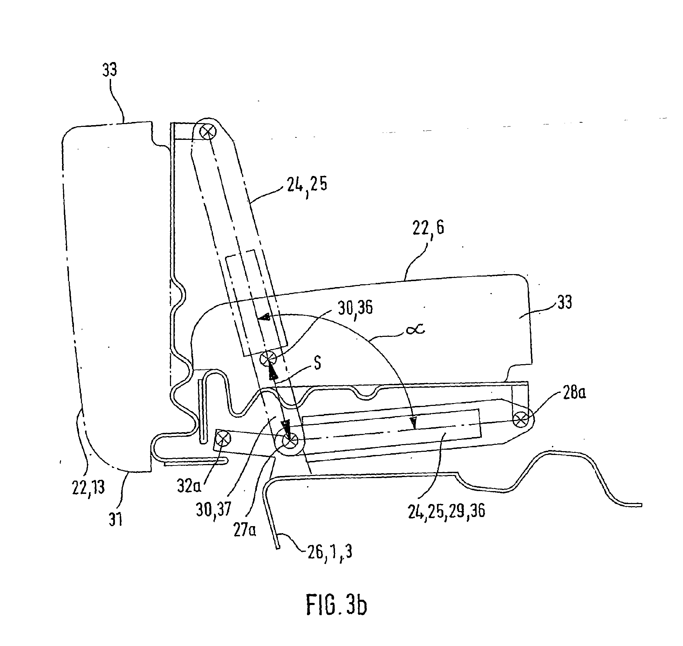

Die Fig. 3b unterscheidet sich von der Fig. 3a dadurch, dass die Oberschenkelauflage 22 um eine vordere Drehachse 32a nach vorne verschwenkbar ist. Dazu ist der Kolben 30 über eine Drehachse 27a am Untergestell 26 des Sitzes 1 befestigt. Der Zylinder 29 ist über eine Drehachse 28a mit dem hinteren Ende 33 der Oberschenkelauflage 22 verbunden.

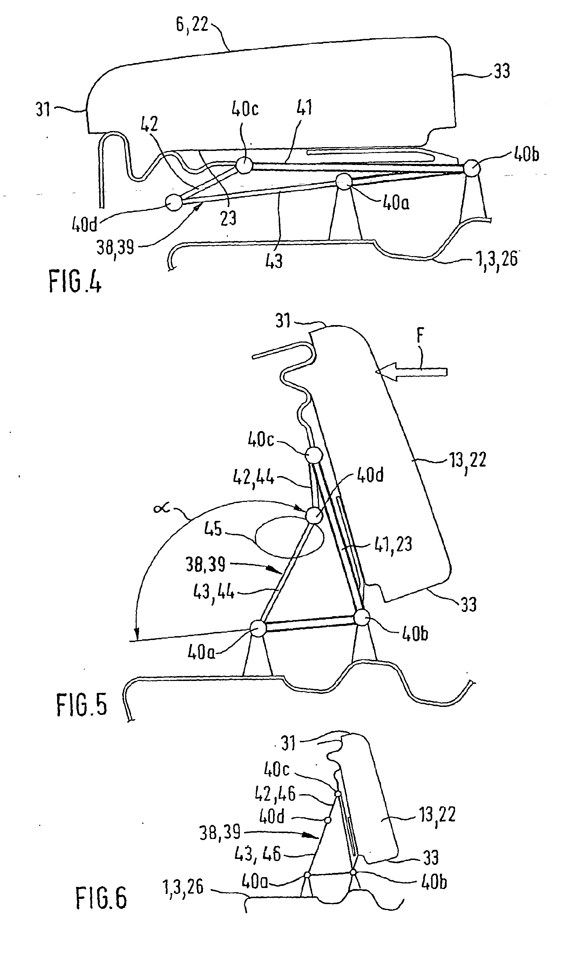

Die Fig. 4, 5 und 6 zeigen eine Schwenk- und Arretierungsvorrichtung 38, die in der gezeigten Ausführungsform als ein Viergelenk 39 ausgebildet ist. Das Viergelenk 39 weist die als Dreh-oder Schwenkachsen fungierenden vier Gelenke 40a, 40b, 40c, 40d auf.

Die beiden Gelenke 40a und 40b sind ortsfest an dem Sitzteil 3 bzw. an dem Untergestell 26 angeordnet und dienen als Schwenkachsen für einen Stab 43 und einen Abschnitt 41 der Oberschenkelauflage 22. Die Verbindung zwischen den Gelenken 40b und 40c ist durch den Abschnitt 41 an der Unterseite 23 der Oberschenkelauflage 22 gebildet. Zwischen den Gelenken 40c und 40d sowie zwischen den Gelenken 40d und 40a ist jeweils ein Stab 42, 43 vorgesehen.

In der Fig. 4 befinden sich der Stab 43 in einer in etwa waagrechten, unteren Lage und die Oberschenkelauflage 22 mit dem Abschnitt 41 in der Sitzposition 6. Der Stab 43 ist nach oben um einen Winkel α verschwenkbar, wie dies in der Fig. 5 dargestellt ist.

Die Stäbe 42 und 43 befinden sich in der Fig. 5 in einer verschränkten Position 44 und die Oberschenkelauflage 22 in der Halterungsposition 13. Aus dieser verschränkten Position 44 ist der Stab 43 manuell durch eine entsprechende Vorrichtung 45, beispielsweise eine Schlaufe oder dergleichen, bewegbar.

Die Fig. 6 zeigt eine gestreckte Lage 46 der Stäbe 42 und 43. Die Verschiebung der Stäbe 42 und 43 aus der gestreckten Lage 46 in die verschränkte Position 44 erfolgt beispielsweise dadurch, dass eine Kraft F auf das Gelenk 40d aufgebracht wird.

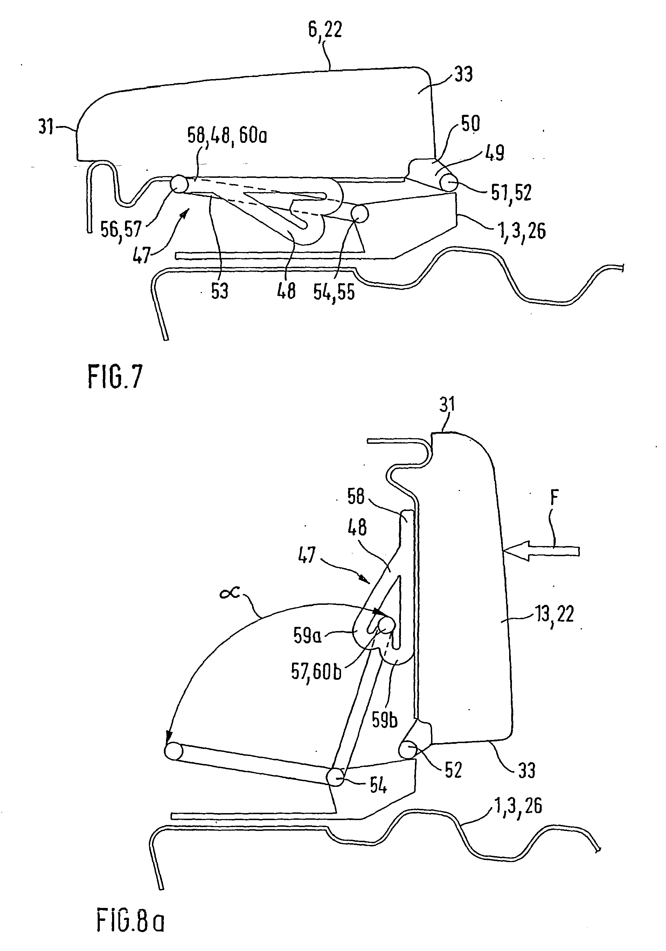

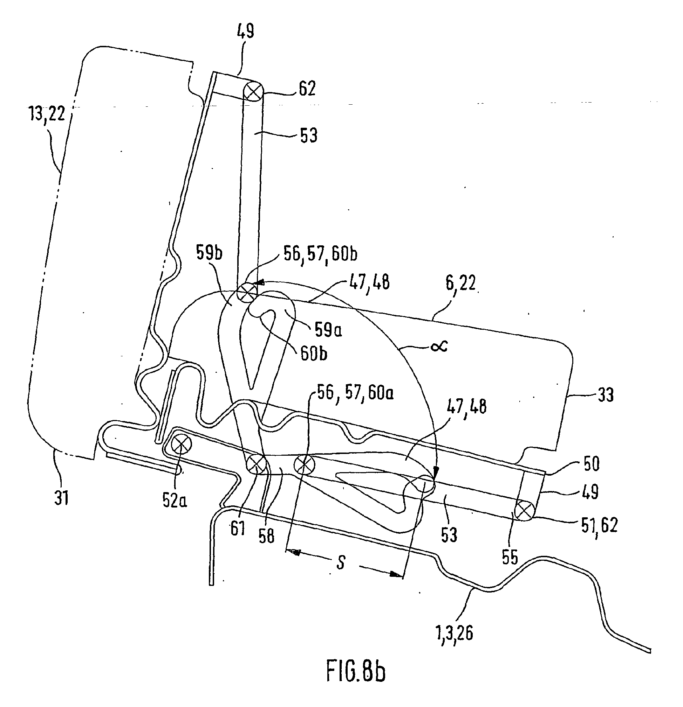

Die Fig. 7, 8a und 8b zeigen eine Schwenk- und Arretierungsvorrichtung 47, die in der gezeigten Ausführungsform eine Kulissenführung 48 aufweist. Ein Ende 50 einer kurzen Kulissenstange 49 ist an dem hinteren Ende 33 der Oberschenkelauflage 22 angeordnet. An dem dazu gegenüberliegenden Ende 51 ist die Kulissenstange 49 an dem Sitzteil 3 bzw. dem Untergestell 26 über ein Gelenk oder eine Schwenkachse 52 befestigt.

Ein Ende 55 einer längeren Kulissenstange 53 ist über ein Gelenk 54 an dem Sitzteil 3 bzw. dem Untergestell 26 gelenkig angeordnet. Ein dazu gegenüberliegendes Ende 56 der Kulissenstange 53 ist mit einem Gleitstein 57 versehen, der in der Kulissenführung 48 geführt ist.

In der in der Fig. 7 gezeigten Sitzposition 6 der Oberschenkelauflage 22 befindet sich der Gleitstein 57 an einem Ende oder an einer Spitze 58 der herzförmigen Kulissenführung 48 in einer Endposition 60 a. In der um den Winkel α in Richtung der Rückenlehne 2 verschwenkten Halterungsposition 13 der Oberschenkelauflage 22, die in der Fig. 8a gezeigt ist, ist der Gleitstein 57 in einer zwischen zwei Kurvenabschnitten 59a und 59b befindlichen Endposition 60 b angeordnet.

Die Schwenk - und Arretierungsvorrichtung 47 ist aus den beiden Endpositionen 60 a und 60 b durch Aufbringen einer Kraft F auf ein nicht dargestelltes, bereits bekanntes, federbelastetes, sogenanntes Push-Push-System entriegelbar.

Die Fig. 8b unterscheidet sich von der Fig. 8a ähnlich wie bei den Fig. 3a und 3b dadurch, dass die Oberschenkelauflage 22 nach vorne um eine an dem Sitzteil 3 und an dem Untergestell 26 angeordnete Schwenkachse 52a verschwenkbar ist.

Die Spitze 58 der herzförmigen Kulissenführung 48 ist über eine am Untergestell 26 ortsfest angeordnete Schwenkachse 61 drehbar befestigt. Das Ende 55 der Kulissenstange 53 ist über eine Schwenkachse 62 mit dem Ende 51 der Kulissenstange 49 drehbar verbunden. Das dazu gegenüberliegende Ende 50 der Kulissenstange 49 ist ortsfest am Ende 33 der Oberschenkelauflage 22 angeordnet.

In der Halterungsposition 13 der Oberschenkelauflage 22 ist der Gleitstein 57 in dem Kurvenabschnitt 59b in einer Endposition 60 b angeordnet. In der Sitzposition 6 der Oberschenkelauflage 22 befindet sich der Gleitstein 57 in der Endposition 60 a zwischen der Spitze 58 der herzförmigen Kulissenführung 48 und der ortsfest angeordneten Schwenkachse 61.

## Patentansprüche

1. Sitz (1) für ein Fahrzeug, mit einer Rückenlehne (2) und einem an der Rückenlehne (2) angeordneten Sitzteil (3), wobei das Sitzteil (3) ein Untergestell (26) aufweist, das mit einer Karosserie des Fahrzeuges verbindbar ist, wobei vor dem Sitzteil (3) ein separates Bauteil (22) zur Verlängerung der Oberschenkelauflagefläche in Längsrichtung x des Sitzteils (3) angeordnet ist, wobei das separate Bauteil (22) sich in einer eingefahrenen Position (8) vor dem Sitzteil (3) befindet, wobei das separate Bauteil (22) aus der eingefahrenen Position (8) um eine vorbestimmte Ausfahrstrecke in eine ausgefahrene Position (11) und zurück verschiebbar ist, mit einer Vorrichtung zum Verschieben des separaten Bauteils (22) von der eingefahrenen Position (8) in die ausgefahrene Position (11) und zurück, wobei das separate Bauteil (22) oder ein Abschnitt (7) des separaten Bauteils (22) um eine horizontale, in Querrichtung (y) des Sitzteil (3) verlaufende Schwenkachse (12; 27, 28, 32; 27a, 28a, 32a; 40a, 40b, 40c, 40d; 52, 54, 57; 52a, 61, 62) verschwenkbar an dem Sitzteil (3) von einer in etwa waagrechten Sitzposition (6) in eine um einen Winkel (α) verschwenkte Halterungsposition (13) und zurück bewegbar ist,
**dadurch gekennzeichnet, dass** in der Halterungsposition (13) ein Gegenstand (15), der sich auf dem Sitzteil (3) befindet, durch das separate Bauteil (22) oder einen Abschnitt (7) des separaten Bauteils (22) gehaltert ist.

2. Sitz nach Anspruch 1,
**dadurch gekennzeichnet, dass** zwischen dem Sitzteil (3), gegebenenfalls dem Untergestell (26) des Sitzteiles (3), und dem separaten Bauteil (5, 22) mindestens die Schwenkachse (12; 27, 28, 32; 27a, 28a, 32a; 40a, 40b, 40c, 40d; 52, 54, 57; 52a, 61, 62) ausgebildet ist.

3. Sitz nach den Ansprüchen 1 oder 2,
**dadurch gekennzeichnet, dass** die Schwenkachse (12, 32, 32a, 40b, 52, 52a), um die sich ein Ende (33, 31) des separaten Bauteils (5, 22) dreht, entweder in der Nähe der Stirnseite (4) des Sitzteiles (3) oder beabstandet zu der Stirnseite (4) des Sitzteiles (3) in Höhe des hinteren Endes (33) des separates Bauteils (5, 22) ausgebildet ist.

4. Sitz nach einem der vorhergehenden Ansprüche,
**dadurch gekennzeichnet, dass** das separate Bauteil (5, 22) aus einer in einer Ausnehmung (9) des Sitzteils (3) gelegenen End-Position (8) bis in eine von einer Stirnseite (4) des Sitzteils (3) beabstandete End-Position (11) und zurück bewegbar ist.

5. Sitz nach einem der vorhergehenden Ansprüche,
**dadurch gekennzeichnet, dass** das separate Bauteil (5, 22) durch eine Schwenk- und Arretierungsvorrichtung (24, 38, 47) verstellbar ist.

6. Sitz nach Anspruch 5,
**dadurch gekennzeichnet, dass** die Schwenk- und Arretierungsvorrichtung (24) eine Zylinder- und Kolbeneinheit (25) ist, die um einen Winkel α schwenkbar ist und dass der Kolben (30) um einen Hub s geradlinig verfahrbar ist.

7. Sitz nach Anspruch 5,
**dadurch gekennzeichnet, dass** die Schwenk- und Arretierungsvorrichtung (38) ein Viergelenk (39) ist, das in der verschwenkten Halterungsposition (13) in eine verschränkte Position (44) bringbar ist.

8. Sitz nach Anspruch 5,
**dadurch gekennzeichnet, dass** die Schwenk- und Arretierungsvorrichtung (47) eine Kulissenführung aufweist, in der ein an einer Kulissenstange (53) angeordneter Gleitstein (57) in zwei End-Positionen (60a und 60b) bringbar ist.

9. Sitz nach Anspruch 5
**dadurch gekennzeichnet, dass** die Anordnung der Schwenk- und Arretierungsvorrichtung (24, 38, 47) an seitlichen Abschnitten des Sitzteiles (3) angeordnet ist.

10. Sitz nach einem der vorhergehenden Ansprüche,
**dadurch gekennzeichnet, dass** Mittel vorgesehen sind, durch die ein Verschwenken des separaten Bauteils (5, 22) nach oben nur dann erfolgen kann, wenn der Sitzplatz auf dem Sitzteil (3) nicht belegt ist.

## Claims

1. A seat (1) for a vehicle comprising a back rest (2) and a seat part (3) disposed on the back rest (2), wherein the seat part (3) has a supporting frame (26) connected to a vehicle body, wherein a separate component (22) is disposed in front of the seat part (3) in order to prolong the thigh-supporting surface in the longitudinal direction (x) of the seat part (3), wherein the separate component (22) is in a retracted position (8) in front of the seat part (3), wherein the separate part (22) is movable from the retracted position (8) through a predetermined distance into an extended position (11) and back, comprising a device for moving the separate part (22) from the retracted position (8) into the extended position (11) and back, wherein the separate part (22) or a portion (7) of the separate part (22) is pivotable around a horizontal axis (12; 27, 28, 32; 27a, 28a, 32a; 40a, 40b, 40c, 40d; 52, 54, 57; 52a, 61, 62) extending in the transverse direction (y) of the seat part (3), on the seat part (3) from an approximately horizontal sitting position (6) into a retaining position (13) pivoted through an angle (α) and back,
**characterised in that** in the retaining position (13) an object (15) on the seat part (3) is retained by the separate part (22) or by a portion (7) of the separate part (22).

2. A seat according to claim 1, **characterised in that** at least the axis (12; 27, 28, 32; 27a, 28a, 32a; 40a, 40b, 40c, 40d; 52, 54, 57; 52a, 61, 62) is formed between the separate component (5, 22) and the seat part (3) or if required the supporting frame (26) of the seat part (3).

3. A seat according to claim 1 or 2, **characterised in that** the axis (12, 32, 32a, 40b, 52, 52a) around which an end (33, 31) of the separate part (5, 22) rotates is situated either near the end face (4) of the seat part (3) or at a distance from the end face (4) of the seat part (3) and level with the rear end (33) of the separate part (5, 22).

4. A seat according to any of the preceding claims, **characterised in that** the separate part (5, 22) is movable out of an end position (8) in a recess (9) of the seat part (3) into an end position (11) at a distance from an end face (4) of the seat part (3) and back.

5. A seat according to any of the preceding claims, **characterised in that** the separate part (5, 22) is adjustable by a pivoting and locking device (24, 38, 47).

6. A seat according to claim 5, **characterised in that** the pivoting and locking device (24) is a cylinder and piston unit (25) pivotable through an angle (α) and the piston (30) is movable in a straight line along a stroke (s).

7. A seat according to claim 5, **characterised in that** the pivoting and locking device (38) is a four-bar linkage (39) for bringing into an interlaced position (44) when in the pivoted retaining position (13).

8. A seat part according to claim 5, **characterised in that** the pivoting and locking device (47) is a slotted guide in which a sliding block (57) disposed on a rocker arm (53) is movable into two end positions (60a and 60b).

9. A seat according to claim 5, **characterised in that** the pivoting and locking device (24, 38, 47) is disposed on lateral portions of the seat part (3).

10. A seat according to any of the preceding claims, **characterised in that** means are provided whereby movement of the separate component (5, 22) upwards can occur only when the seat surface on the seat part (3) is not occupied.

## Revendications

1. Siège (1) de véhicule comportant un dossier (2) avec une assise (3),
- l'assise (3) ayant un châssis (26) relié à la carrosserie du véhicule,
- une pièce séparée (22) pour prolonger la surface d'appui des cuisses étant prévue devant l'assise (3) dans la direction longitudinale (x) de l'assise (3),
- la pièce séparée (22) se trouvant devant l'assise (3) en position rentrée (8),
- la pièce séparée (22) pouvant être coulissée de la position rentrée (8) vers une position sortie (11) et inversement, selon une course prédéfinie, par un dispositif de coulissement de la pièce séparée (22) pour la faire passer de sa position rentrée (8) dans sa position déployée (11) et inversement,
- la pièce séparée (22) ou un segment (7) de la pièce séparée (22) pouvant basculer autour d'un axe de basculement horizontal (12, 27, 28, 32, 27a, 28a, 32a, 40a, 40b, 40c, 40d, 52, 54, 57, 52a, 61, 62), dirigé dans la direction transversale (y) de l'assise (3), entre une position assise (6), horizontale vers une position de retenue (13) basculée d'un angle (α) et inversement,
**caractérisé en ce que**
dans la position de retenue (13), un objet (15) qui se trouve sur l'assise (3), est retenu par la pièce séparée (22) ou un segment (7) de la pièce séparée (22).

2. Siège selon la revendication 1,
**caractérisé en ce que**
l'axe de basculement (12, 27, 28, 32, 27a, 28a, 32a, 40a, 40b, 40c, 40d, 52, 54, 57, 52a, 61, 62), est réalisé entre l'assise (3) et le cas échéant, son châssis (26) et la pièce séparée (5, 22).

3. Siège selon la revendication 1 ou 2,
**caractérisé en ce que**
l'axe de basculement (12, 32, 32a, 40b, 52, 52a), autour duquel tourne une extrémité (33, 31) de la pièce séparée (5, 22), est prévu soit à proximité de la face frontale (4) du siège (3), soit écarté de la face frontale (4) du siège (3) à hauteur de l'extrémité arrière (33) de la pièce séparée (5, 22).

4. Siège selon l'une des revendications précédentes,
**caractérisé en ce que**
la pièce séparée (5, 22) peut être déplacée entre une position de fin de course (8) située dans une cavité (9) de l'assise (3) jusque dans une position de fin de course (11) écartée de la face frontale (4) de l'assise (3) et inversement.

5. Siège selon l'une des revendications précédentes,
**caractérisé en ce que**
la pièce séparée (5, 22) est réglable par un dispositif de basculement et de blocage (24, 38, 47).

6. Siège selon la revendication 5,
**caractérisé en ce que**
le dispositif de basculement et de blocage (24) est un dispositif à vérin (cylindre et piston) (25) qui pivote d'un angle (α) et le piston (30) est mobile en ligne droite suivant une course (s).

7. Siège selon la revendication 5,
**caractérisé en ce que**
le dispositif de basculement et de blocage (38) est un quadrangle articulé (39) qui, en position de fixation basculée (13), peut être mis dans une position bloquée (44).

8. Siège selon la revendication 5,
**caractérisé en ce que**
le dispositif de basculement et de blocage (47) comporte une coulisse de guidage dans laquelle un galet coulissant (57) porté par une tige de coulisse (53), peut être mis dans deux positions de fin de course (60a et 60b).

9. Siège selon la revendication 5,
**caractérisé en ce que**
le dispositif de basculement et de blocage (24, 38, 47) est monté sur des segments latéraux de la partie de siège (3).

10. Siège selon l'une des revendications précédentes,
**caractérisé par**
des moyens permettant un basculement de la pièce séparée (5, 22), vers le haut, seulement si la place de l'assise (3) n'est pas occupée.
